# FASCICULE DE BREVET EUROPEEN

(11) **EP 2 763 875 B1**
(45) Date de publication et mention de la délivrance du brevet: **23.01.2019**
(21) Numéro de dépôt: 12768849.7
(22) Date de dépôt: 05.10.2012
(51) Int. Cl.: B60S 1/08, B60S 1/18

(54) **COMMUTATEUR ÉLECTRIQUE POUR SYSTÈME D'ENTRAÎNEMENT DE BALAI D'ESSUYAGE ET SYSTÈME D'ENTRAÎNEMENT CORRESPONDANT**
ELEKTRISCHER KOMMUTATOR FÜR EIN WISCHERBLATTANTRIEBSSYSTEM UND ENTSPRECHENDES ANTRIEBSSYSTEM
ELECTRICAL COMMUTATOR FOR WIPER BLADE DRIVE SYSTEM AND CORRESPONDING DRIVE SYSTEM

(30) Priorité: 07.10.2011 FR 1159074
(43) Date de publication de la demande: 13.08.2014
(73) Titulaire: Valeo Systèmes d'Essuyage, 78322 Le Mesnil Saint Denis (FR)
(72) Inventeur: BLANCHET, Pierre, 86140 Clairvaux (FR); JENDRASZCZAK, Jean, 86100 Châtellerault (FR); SERVIN, Alain, Villiers 86190 (FR)
(74) Mandataire: Callu-Danseux, Violaine
(86) Numéro de dépôt international: PCT/EP2012/069728
(87) Numéro de publication internationale: WO 2013/050534

(56) Documents cités:
- EP-A2- 2 184 515
- DE-A1-102009 045 328
- FR-A1- 2 950 011
- FR-A1- 2 957 874

## Description

La présente invention concerne un commutateur électrique pour un système d'entraînement pour un mécanisme d'essuyage, et un système d'entraînement correspondant.

L'invention propose plus particulièrement un système d'entraînement d'un balai d'essuyage d'un panneau vitré de véhicule automobile.

Un tel système d'entraînement comporte généralement un dispositif de production d'un mouvement de balayage alterné du balai par rapport au panneau vitré et comporte des moyens de montage du système d'entraînement dans le véhicule, plus précisément sur un élément de structure correspondant du véhicule.

Le dispositif de production d'un mouvement de balayage alterné du balai comprend notamment un moteur et un moyen de transformation du mouvement de rotation de l'arbre d'entraînement du moteur en un mouvement de rotation alternée d'un arbre de sortie portant un bras d'entraînement du balai d'essuyage.

Un tel sous ensemble est monté sur un élément de structure d'un véhicule automobile et est raccordé électriquement pour son alimentation et sa commande.

Selon une solution connue, le système d'entraînement comporte à cet effet un commutateur électrique rotatif pour la commande du moteur.

Cette commande est notamment fonction de la position relative du système d'entraînement par rapport au panneau vitré. Cette information est déterminée par rapport à la position angulaire de la roue du moyen de transformation déterminée à l'aide d'un moyen de détection de la position angulaire de la roue.

On connaît un tel moyen de détection comportant plusieurs lames de contact susceptibles de coopérer, en fonction de la position angulaire de la roue, avec une piste conductrice ou encore avec une ou plusieurs zones isolantes par exemple une zone d'arrêt. Les lames sont réalisées en matériau conducteur.

On prévoit généralement un porte-contacts comportant un corps isolant pour recevoir les lames de contact.

Ce corps isolant est par exemple surmoulé autour des lames de contact. Le porte-contacts forme ainsi un bloc isolant autour des lames de contact alignées.

Ce porte-contacts recevant les lames de contact est agencé de sorte que les extrémités libres des contacts puissent venir en contact avec une piste et/ou une zone isolante de la roue selon la position angulaire de la roue. En général, le porte-contacts est agencé sensiblement verticalement au-dessus de la roue d'entraînement.

Afin d'éviter un court-circuit, il faut prévoir un diélectrique d'au moins 1 mm entre la piste de contact de la roue et les lames de contact coopérant avec les zones isolantes.

Ce diélectrique est généralement horizontal, c'est-à-dire sensiblement parallèle au plan défini par la roue d'entraînement.

Ceci génère un encombrement radial sur la roue d'entraînement.

Les développements récents concernant la conception des mécanismes d'essuyage de panneaux vitrés, ont pour objectif d'obtenir des systèmes d'entraînement de mécanisme d'essuyage compacts.

Le document FR 2 957 874 A1 montre un commutateur électrique tel que décrit dans le préambule de la première revendication.

L'invention a donc pour objectif de limiter l'encombrement du commutateur et donc du système d'entraînement du balai d'essuyage.

À cet effet, l'invention a pour objet un commutateur électrique pour un système d'entraînement d'un balai d'essuyage d'un panneau vitré de véhicule automobile comprenant un moteur, ledit commutateur comportant au moins une roue d'entraînement entraînée par ledit moteur en rotation autour d'un axe de rotation, et un moyen de détection de la position angulaire de la roue autour dudit axe de rotation, caractérisé en ce que :
- ladite roue porte au moins une piste conductrice et au moins une zone isolante s'étendant dans un plan sensiblement parallèle au plan défini par ladite au moins une piste conductrice, et ladite au moins une zone isolante étant agencée à une distance de ladite au moins une piste conductrice selon une direction sensiblement perpendiculaire au plan défini par ladite au moins une piste conductrice, et en ce que
- ledit moyen de détection comporte trois lames de contact conductrices agencées de manière à venir en contact avec ladite roue et en étant décalées angulairement l'une par rapport à l'autre.

Ledit commutateur peut en outre comporter une ou plusieurs caractéristiques suivantes, prises séparément ou en combinaison :
- ladite au moins une zone isolante est conformée en rampe ;
- ladite rampe présente une hauteur supérieure ou égale à 1 mm ;
- ladite roue porte une première zone isolante neutre à la périphérie de ladite roue, une deuxième zone isolante d'arrêt agencée vers l'intérieur de ladite roue, lesdites zones isolantes étant agencées de part et d'autre d'une piste conductrice ;
- ladite zone neutre et ladite zone d'arrêt sont conformées en rampe ;
- ladite première zone neutre présente une forme générale circulaire ouverte, et ladite piste conductrice s'étend dans l'ouverture de ladite première zone neutre ;
- les trois lames de contact comportent une première lame de contact configurée pour coopérer avec ladite première zone isolante neutre ou une portion de piste conductrice, une deuxième lame de contact configurée pour coopérer avec la piste conductrice ou avec la deuxième zone d'arrêt en fonction de la position angulaire de ladite roue, et une troisième lame de contact configurée pour coopérer avec la piste conductrice ;
- ladite roue porte ladite piste conductrice et ladite au moins une zone isolante sur une première face configurée pour être agencée en regard d'une platine de montage dudit système d'entraînement.

L'invention concerne encore une système d'entraînement d'un balai d'essuyage d'un panneau vitré de véhicule automobile, ledit système d'entraînement comportant :
- un dispositif de production d'un mouvement de balayage alterné dudit balai par rapport audit panneau vitré, comportant un moteur d'entraînement, et
- un commutateur électrique comprenant au moins une roue d'entraînement entraînée par ledit moteur en rotation autour d'un axe de rotation et un moyen de détection de la position angulaire de la roue autour du premier axe,
caractérisé en ce que ledit commutateur électrique est conforme à l'une quelconque des revendications précédentes.

Ledit système d'entraînement peut en outre comporter une ou plusieurs caractéristiques suivantes, prises séparément ou en combinaison :
- ledit système comprend des moyens de montage du système d'entraînement dans ledit véhicule, et lesdits moyens de montage comportent une platine portant les trois lames de contact conductrices ;
- ladite platine de montage est d'une part reliée à une structure associée de montage dudit véhicule et est d'autre part reliée au dispositif de production de mouvement ;
- ledit dispositif de production de mouvement comporte un socle de support qui délimite un volume intérieur dans lequel au moins une partie des composants dudit dispositif de production de mouvement est reçue, et le socle comporte une ouverture d'accès au volume intérieur qui est fermée par ladite platine de montage.

D'autres caractéristiques et avantages de l'invention ressortiront de la description suivante, donnée à titre d'exemple, sans caractère limitatif, en regard des dessins annexés sur lesquels :
- la figure 1 est une représentation schématique de coté d'un système d'entraînement selon l'invention ;
- la figure 2 est une vue schématique de dessus d'un dispositif de production de mouvement du système d'entraînement représenté à la figure 1 ;
- la figure 3 est une vue schématique de dessus d'un moyen de transformation du dispositif de la figure 2 sur laquelle est représentée un commutateur électrique du moteur du dispositif de la figure 2,
- la figure 4a est une vue schématique de dessus du commutateur électrique de la figure 3,
- la figure 4b représente de façon schématique une vue en perspective éclatée de la figure 4a, et
- la figure 5 représente de façon schématique le circuit électrique de commande du moteur d'entraînement du dispositif de production de mouvement.

Dans ces figures les éléments sensiblement identiques portent les mêmes numéros de référence.

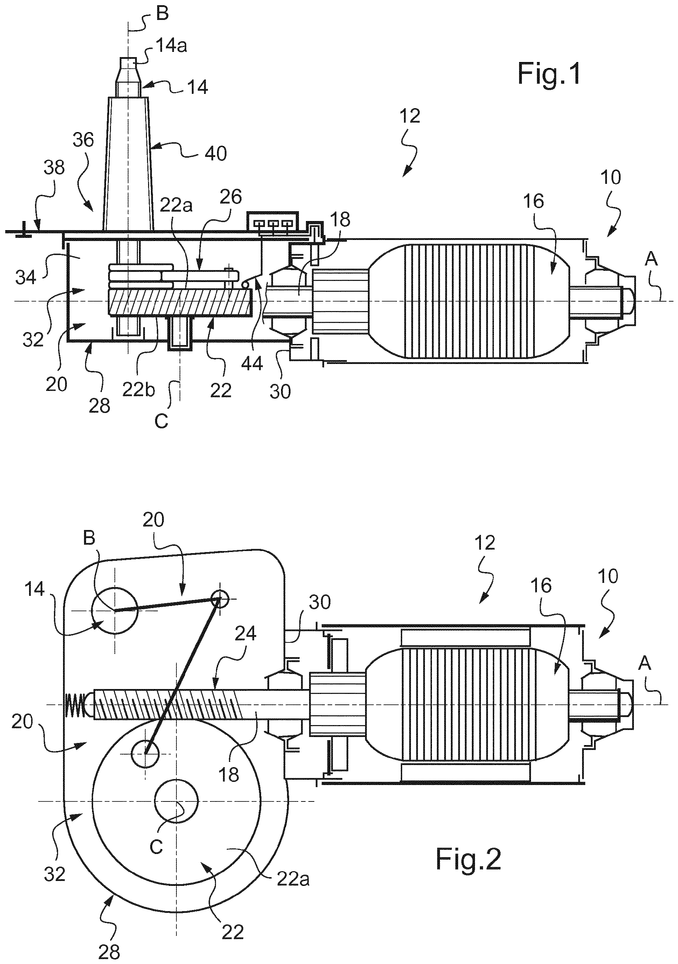

On a représenté sur les figures 1 et 2 un système d'entraînement 10 d'un mécanisme d'essuyage d'un panneau vitré de véhicule automobile, par exemple pour le pare-brise avant du véhicule.

Le système d'entraînement 10 comporte un dispositif 12 de production d'un mouvement de balayage alterné d'un arbre de sortie 14 dont l'extrémité libre 14a est configurée pour porter un bras d'entraînement (non représenté) d'un balai d'essuyage (non représenté) du panneau vitré.

Le système d'entraînement 10 comporte en outre des moyens 36 pour le montage du système d'entraînement 10 dans le véhicule, par exemple sur un élément de structure correspondant (non représenté) du véhicule.

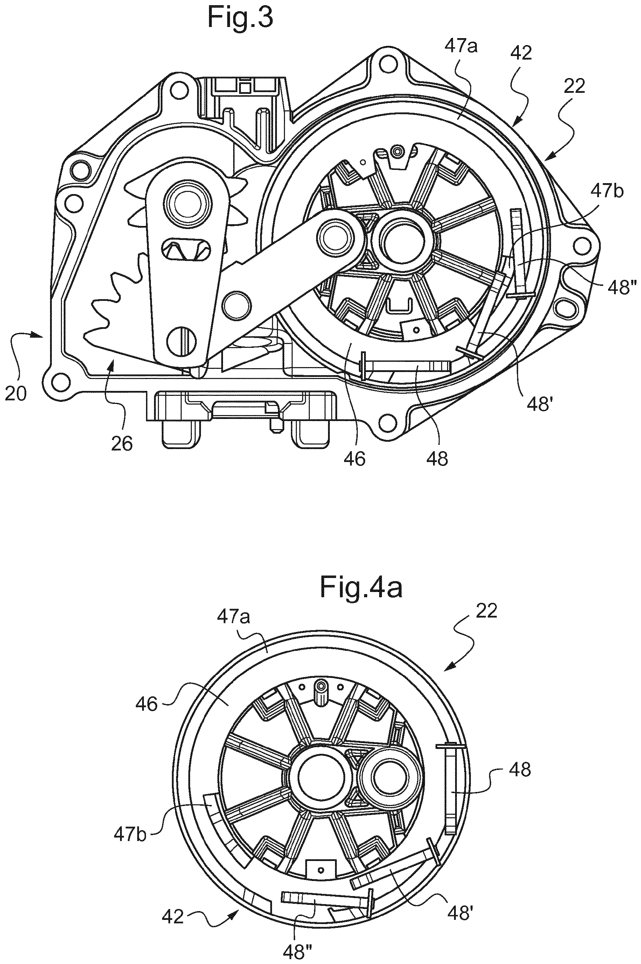

Selon le mode de réalisation illustré, le dispositif de production de mouvement 12 comporte :
- un moteur d'entraînement 16 dont l'arbre d'entraînement 18 est mobile en rotation continue autour d'un premier axe A de rotation, et
- un moyen de transformation 20 du mouvement de rotation de l'arbre d'entraînement 18 en un mouvement de rotation alternée de l'arbre de sortie 14 autour d'un deuxième axe B perpendiculaire au premier axe A (cf figures 2 et 3).

Le moyen de transformation 20 de mouvement comporte une roue 22, qui est montée en rotation autour d'un troisième axe C parallèle au deuxième axe B de rotation de l'arbre de sortie 14, et une vis sans fin 24 montée à l'extrémité de l'arbre d'entraînement 18.

La roue 22 présente une première face 22a et une deuxième face 22b opposée à la première face 22a.

L'ensemble roue 22 et vis sans fin 24 transforme le mouvement de rotation continue de l'arbre 18 du moteur 16 autour du premier axe A en un autre mouvement de rotation continue de la roue 22 autour du troisième axe C, perpendiculaire au premier axe A et la vitesse de rotation de la roue 22 est inférieure à la vitesse de rotation de l'arbre 18 d'entraînement.

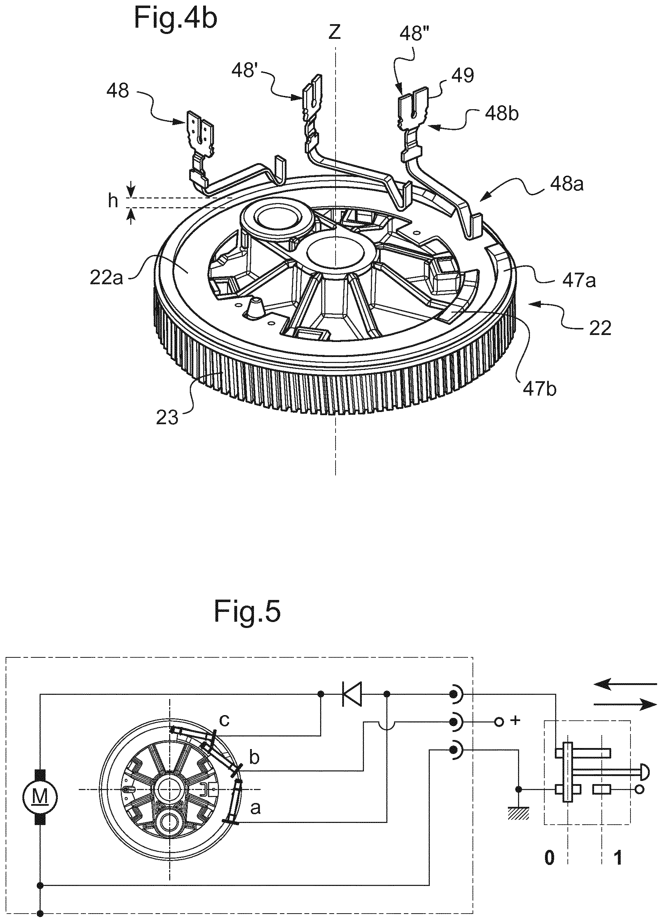

À cet effet, la roue 22 mieux visible sur les figures 4a,4b présente sur sa face externe un pignon denté 23 pour engrener la vis sans fin 24 (cf figures 2 à 4b).

Le moyen de transformation de mouvement 20 comporte aussi une tringlerie 26, ou embiellage reliant la roue 22 à l'arbre de sortie 14, et par l'intermédiaire de laquelle le mouvement de rotation continue de la roue 22 autour du troisième axe C est transformé en un mouvement de rotation alternée de l'arbre de sortie 14 autour du deuxième axe B.

Le dispositif de production de mouvement 12 comporte aussi un socle de support 28 qui porte les composants du dispositif de production de mouvement 12.

Le socle 28 délimite un volume intérieur 32 dans lequel la roue 22, la vis sans fin 24 et la tringlerie 26 sont reçues. Le socle 28 comporte une ouverture supérieure 34 pour l'accès au volume intérieur 32.

Le socle 28 comporte une paroi 30 de fixation du moteur 16, et qui est traversée par l'arbre d'entraînement 18.

Les moyens de montage 36 quant à eux réalisent l'interface entre le dispositif de production de mouvement 12 et la structure de caisse du véhicule.

Les moyens de montage 36 comportent une platine de montage 38 sur laquelle le socle 28 est monté, et cette platine 38 est apte à être montée sur l'élément de structure du véhicule.

La platine 38 présente une première face supérieure 38a et une deuxième face inférieure 38b opposée à la première face 38a et en regard du volume intérieur 32 défini par le socle 28.

Selon un mode de réalisation préféré de la platine 38, la liaison entre la platine 38 et le socle 28 est réalisée de manière que la platine 38 obture de manière étanche l'ouverture 34 du socle 28.

Ainsi, les composants du dispositif de production de mouvement 12, qui sont reçus à l'intérieur du socle 28 sont protégés des poussières et de l'humidité extérieures.

Selon le mode de réalisation illustré sur la figure 1, la platine 38 porte un fût 40 de guidage de l'arbre de sortie 14 en pivotement autour du deuxième axe B vertical.

Le système d'entraînement 10 comporte en outre un commutateur électrique 42 pour la commande du moteur 16. Il s'agit d'un commutateur rotatif 42.

Le commutateur 42 est conçu de manière à commander l'arrêt du moteur 16.

La commande est fonction de la position du balai par rapport au panneau vitré.

Le commutateur 42 permet de façon connue de réaliser un dispositif d'arrêt fixe du moteur électrique 16 par exemple en position « parking ».

À cet effet, on prévoit un circuit électronique de commande (cf figure 5) qui comprend une connectique de raccordement au moteur 16, pour la commande et/ou l'alimentation du moteur 16.

Aussi, le circuit électronique de commande peut comporter une connectique de raccordement au circuit électronique général du véhicule.

L'information relative à la position du balai par rapport au panneau vitré est déterminée par rapport à la position angulaire de la roue 22 autour du troisième axe C.

Pour cela, le commutateur 42 comporte un moyen de détection 44 de la position angulaire de la roue 22 autour du troisième axe C (cf figures 3 à 4b).

Ce moyen de détection 44 est agencé de manière à coopérer avec la première face 22a de la roue 22 qui est située en vis-à-vis de la platine 38.

Plus précisément, la roue 22 porte sur sa face 22a une piste conductrice 46 et au moins une zone isolante 47a,47b.

La ou les zones isolantes 47a,47b s'étendent dans un plan sensiblement parallèle au plan défini par la piste conductrice 46, à une distance h de la piste conductrice 46 selon une direction Z sensiblement perpendiculaire au plan défini par la piste conductrice 46 (cf figure 4b).

En référence à la figure 4b, la ou les zones isolantes 47a,47b s'étendent à une distance h de la piste conductrice 46 selon une direction Z sensiblement verticale par rapport au plan défini par la piste 46. La ou les zones isolantes 47a,47b sont donc surélevées verticalement par rapport à la piste conductrice 46.

Selon l'exemple illustré sur les figures 3 à 4b, la roue 22 porte une première zone isolante neutre 47a à la périphérie de la roue 22, une deuxième zone isolante d'arrêt 47b agencée vers l'intérieur de la roue, et ces deux zones isolantes 47a,47b sont agencées de part et d'autre de la piste conductrice 46.

La zone neutre 47a et la zone d'arrêt 47b sont par exemple conformées en rampe.

La hauteur h de rampe est d'au moins 1 mm.

On entend par « rampe », le fait que la hauteur h croît progressivement jusqu'à une hauteur d'au moins 1 mm. Cette progression se remarque aux deux bords d'extrémité d'une zone isolante 47a,47b.

Bien entendu, toute forme permettant une distance verticale entre la piste conductrice 46 et les zones isolantes 47a,47b peut être prévue. À titre d'exemple, on pourrait envisager une forme sensiblement en escalier des zones isolantes 47a,47b.

De plus, la première zone neutre 47a présente une forme générale circulaire ouverte, et la piste conductrice 46 s'étend dans l'ouverture de la première zone neutre 47a. En effet, comme on le remarque mieux sur les figures 4a,4b la piste conductrice 46 s'étend sur un secteur angulaire interrompant la première zone neutre 47a.

Le moyen de détection 44 comporte quant à lui trois lames de contact conductrices 48,48',48", frottant sur la roue 22 et aptes à venir en contact électrique avec une piste 46 et/ou une zone isolante 47a,47b selon la position angulaire de la roue 22 (cf figures 3 à 4b).

La piste 46, les zones isolantes 47a,47b, et les lames 48,48',48" forment un dispositif d'arrêt fixe du moteur électrique 16, de façon à assurer que le moteur 16 s'arrête toujours dans la même position.

Une lame de contact 48,48',48", est à titre d'exemple réalisée par découpe et pliage d'une tôle conductrice métallique et est ainsi réalisée sous la forme d'un élément déformable élastiquement pour assurer un contact avec une piste ou zone de la roue 22.

En outre, une lame de contact 48,48',48", peut présenter une première partie 48a venant en contact avec la roue 22 et une deuxième partie 48b fixe, comme cela est mieux visible sur la figure 4b.

La première partie de contact 48a présente par exemple une forme sensiblement coudée.

En outre, la deuxième partie 48b d'une lame de contact 48,48',48", peut se terminer par des bornes 49 de raccordement à un circuit électrique réalisées par exemple d'une seule pièce avec la lame de contact.

Les trois lames de contact 48,48',48", sont agencées de manière à venir en contact avec la piste 46 et/ou une zone isolante 47a,47b de la roue 22 et en étant décalées angulairement l'une par rapport à l'autre.

Plus précisément, on prévoit :
- une première lame de contact 48 configurée pour coopérer avec la première zone isolante neutre 47a ou une portion de piste conductrice 46,
- une deuxième lame de contact 48' configurée pour coopérer avec la piste conductrice 46 ou avec la deuxième zone d'arrêt 47b en fonction de la position angulaire de la roue 22, et
- une troisième lame de contact 48" configurée pour coopérer avec la piste conductrice 46.

La première lame 48 de contact forme le contact « a » sur la figure 5, la deuxième lame 48' forme le contact « b », et la troisième lame 48" forme le contact « c ».

Cet arrangement des lames de contact 48,48',48" décalées angulairement l'une par à l'autre, et la surélévation verticale des zones isolantes 47a,47b permet de diminuer l'encombrement radial des lames de contact 48,48',48" sur la roue 22 et d'obtenir un commutateur 42 plus compact.

En effet, le diélectrique d'au moins 1 mm entre la piste conductrice 46 et les première 48 et deuxième 48' lames de contact est respecté. Selon le mode de réalisation décrit le diélectrique est vertical en référence aux figures 4a,4b. À savoir, le diélectrique d'au moins 1 mm se fait selon la direction Z sensiblement perpendiculaire au plan général défini par la roue 22 (cf figure 4b).

En se référant à la figure 5, lorsqu'on enclenche le système d'entraînement 10, le commutateur passe en « 1 ».

Les contacts a,b,c sont reliés à une borne positive (+) d'alimentation, de sorte que le moteur 16 tourne et la roue 22 tourne.

Lorsqu'on supprime le système d'entraînement 10, le commutateur passe en « 0 » et deux positions des contacts a,b,c avec la piste 46 et les zones isolantes 47a et 47b sont possibles.

À savoir, une première position dans laquelle le contact a est en contact avec la zone neutre 47a, le contact c est en contact avec la piste 46, et le contact b est relié à la borne positive (+) et est en contact avec la piste 46.

Dans cette configuration, le moteur 16 et la roue 22 tournent car la borne positive (+) est reliée au contact b qui est en contact avec la piste 46.

Comme le contact c est aussi en contact avec la piste 46, le contact c est relié à la borne positive (+) et alimente le moteur 16.

La roue 22 tournant le contact b arrive sur la zone d'arrêt 47b et coupe l'alimentation du moteur 16 et met en court-circuit l'induit du moteur 16 avec le contact a qui est en contact avec la piste 46 sur la masse.

Les contacts a,b,c sont alors dans une deuxième position dans laquelle les contacts a et c sont en contact avec la piste 46, et le contact b relié à la borne positive (+) est en contact avec la zone d'arrêt 47b.

Dans cette configuration, le moteur 16 et la roue 22 ne tournent pas ; l'induit du moteur 16 est en court-circuit par le contact a qui est en contact avec la piste 46 sur la masse.

On comprend donc qu'un tel agencement des lames de contact 48,48',48" en décalage et la conformation en rampe par exemple des zones isolantes 47a,47b, permet de diminuer l'encombrement radial sur la roue 22 et donc d'obtenir un ensemble plus compact.

## Revendications

1. Commutateur électrique pour un système d'entraînement (10) d'un balai d'essuyage d'un panneau vitré de véhicule automobile comprenant un moteur (16), ledit commutateur comportant :
- au moins une roue d'entraînement (22) entraînée par ledit moteur (16) en rotation autour d'un axe de rotation (C), et
- un moyen (44) de détection de la position angulaire de la roue (22) autour dudit axe de rotation (C),
- ladite roue (22) portant:
• au moins une piste conductrice (46), et
• au moins une zone isolante (47a,47b) s'étendant dans un plan sensiblement parallèle au plan défini par ladite au moins une piste conductrice (46);
le commutateur électrique étant **caractérisé en ce que** ladite au moins une zone isolante (47a,47b) est agencée à une distance (h) de ladite au moins une piste conductrice (46) selon une direction (Z) sensiblement perpendiculaire au plan défini par ladite au moins une piste conductrice (46), et **en ce que**
- ledit moyen de détection (44) comporte trois lames de contact (48, 48', 48") conductrices agencées de manière à venir en contact avec ladite roue (22) et en étant décalées angulairement l'une par rapport à l'autre.

2. Commutateur selon la revendication 1, **caractérisé en ce que** ladite au moins une zone isolante (47a,47b) est conformée en rampe.

3. Commutateur selon la revendication 2, **caractérisé en ce que** ladite rampe présente une hauteur supérieure ou égale à 1 mm.

4. Commutateur selon l'une quelconque des revendications 1 à 3, **caractérisé en ce que** ladite roue (22) porte une première zone isolante (47a) neutre à la périphérie de ladite roue (22), une deuxième zone isolante (47b) d'arrêt agencée vers l'intérieur de ladite roue (22), lesdites zones isolantes (47a,47b) étant agencées de part et d'autre d'une piste conductrice (46).

5. Commutateur selon la revendication 4, **caractérisé en ce que** ladite première zone isolante (47a) neutre et ladite deuxième zone isolante (47b) d'arrêt sont conformées en rampes.

6. Commutateur selon l'une quelconque des revendications 4 ou 5, **caractérisé en ce que** ladite première zone isolante (47a) neutre présente une forme générale circulaire ouverte, et **en ce que** ladite piste conductrice (46) s'étend dans l'ouverture de ladite première zone isolante (47a) neutre.

7. Commutateur selon l'une quelconque des revendications 4 à 6, **caractérisé en ce que** les trois lames de contact (48, 48',48") comportent :
- une première lame de contact (48) configurée pour coopérer avec ladite première zone isolante neutre (47a),
- une deuxième lame de contact (48') configurée pour coopérer avec la piste conductrice (46) ou avec la deuxième zone d'arrêt (47b) en fonction de la position angulaire de ladite roue (22), et
- une troisième lame de contact (48") configurée pour coopérer avec la piste conductrice (46).

8. Commutateur selon l'une quelconque des revendications précédentes, **caractérisé en ce que** ladite roue (22) porte ladite piste conductrice (46) et ladite au moins une zone isolante (47a,47b) sur une première face (22a) configurée pour être agencée en regard d'une platine de montage (38) dudit système d'entraînement (10).

9. Système d'entraînement d'un balai d'essuyage d'un panneau vitré de véhicule automobile, ledit système d'entraînement (10) comportant :
- un dispositif (12) de production d'un mouvement de balayage alterné dudit balai par rapport audit panneau vitré, comportant un moteur (16) d'entraînement, et
- un commutateur électrique (42) comprenant au moins une roue d'entraînement (22) entraînée par ledit moteur (16) en rotation autour d'un axe de rotation (C) et un moyen (44) de détection de la position angulaire de la roue (22) autour du premier axe (C),
**caractérisé en ce que** ledit commutateur électrique (42) est conforme à l'une quelconque des revendications précédentes.

10. Système d'entraînement selon la revendication 9, **caractérisé en ce qu'**il comporte des moyens de montage (36) du système d'entraînement (10) dans ledit véhicule, et **en ce que** lesdits moyens de montage (36) comportent une platine (38) portant les trois lames de contact conductrices.

11. Système d'entraînement selon la revendication 10, **caractérisé en ce que** ladite platine de montage (38) est d'une part reliée à une structure associée de montage dudit véhicule et est d'autre part reliée au dispositif de production de mouvement (12).

12. Système d'entraînement selon l'une quelconque des revendications 10 ou 11, **caractérisé en ce que** ledit dispositif de production de mouvement (12) comporte un socle (28) de support qui délimite un volume intérieur (32) dans lequel au moins une partie des composants (20, 26) dudit dispositif de production de mouvement (12) est reçue, et **en ce que** le socle (28) comporte une ouverture (34) d'accès au volume intérieur (32) qui est fermée par ladite platine de montage (38).

## Patentansprüche

1. Elektrischer Schalter für ein Antriebssystem (10) eines Wischerblatts einer Glasscheibe eines Kraftfahrzeugs umfassend einen Motor (16), wobei der Schalter umfasst:
- wenigstens ein vom Motor (16) in Drehung um eine Drehachse (C) angetriebenes Antriebsrad (22), und
- ein Mittel (44) zum Erfassen der Winkelstellung des Rads (22) um die Drehachse (C),
- wobei das Rad (22) trägt:
• wenigstens eine Leiterbahn (46), und
• wenigstens einen sich auf einer Ebene im Wesentlichen parallel zur von der wenigstens einen Leiterbahn (46) definierten Ebene erstreckenden isolierenden Bereich (47a, 47b);
wobei der elektrische Schalter **dadurch gekennzeichnet ist, dass** der wenigstens eine isolierende Bereich (47a, 47b) in einem Abstand (h) zur wenigstens einen Leiterbahn (46) in einer Richtung (Z) im Wesentlichen senkrecht zur von der wenigstens einen Leiterbahn (46) definierten Ebene angeordnet ist, und dass
- das Erfassungsmittel (44) drei leitende Kontaktmesser (48, 48', 48") umfasst, die dazu ausgebildet sind, in Kontakt mit dem Rad (22) zu kommen, und im Winkel zueinander versetzt sind.

2. Schalter nach Anspruch 1, **dadurch gekennzeichnet, dass** der wenigstens eine isolierende Bereich (47a, 47b) schräg ausgebildet ist.

3. Schalter nach Anspruch 2, **dadurch gekennzeichnet, dass** die Schräge eine Höhe größer gleich 1 mm aufweist.

4. Schalter nach einem der Ansprüche 1 bis 3, **dadurch gekennzeichnet, dass** das Rad (22) einen neutralen ersten isolierenden Bereich (47a) am Umfang des Rads (22) und einen zum Inneren des Rads (22) angeordneten zweiten isolierenden Bereich (47b) zum Stoppen trägt, wobei die isolierenden Bereiche (47a, 47b) an beiden Seiten einer Leiterbahn (46) angeordnet sind.

5. Schalter nach Anspruch 4, **dadurch gekennzeichnet, dass** der neutrale erste isolierende Bereich (47a) und der zweite isolierende Bereich (47b) zum Stoppen schräg ausgebildet sind.

6. Schalter nach Anspruch 4 oder 5, **dadurch gekennzeichnet, dass** der neutrale erste isolierende Bereich (47a) eine im Wesentlichen offene Kreisform aufweist und dass sich die Leiterbahn (46) in der Öffnung des neutralen ersten isolierenden Bereichs (47a) erstreckt.

7. Schalter nach einem der Ansprüche 4 bis 6, **dadurch gekennzeichnet, dass** die drei Kontaktmesser (48, 48',48") umfassen:
- ein zum Zusammenwirken mit dem neutralen ersten isolierenden Bereich (47a) ausgebildetes erstes Kontaktmesser (48),
- ein zum Zusammenwirken mit der Leiterbahn (46) oder mit dem zweiten Bereich zum Stoppen (47b) entsprechend der Winkelstellung des Rads (22) ausgebildetes zweites Kontaktmesser (48'), und
- ein zum Zusammenwirken mit der Leiterbahn (46) ausgebildetes drittes Kontaktmesser (48").

8. Schalter nach einem der vorhergehenden Ansprüche, **dadurch gekennzeichnet, dass** das Rad (22) die Leiterbahn (46) und wenigstens einen zum Anordnen gegenüber einer Montageplatte (38) des Antriebssystems (10) ausgebildeten isolierenden Bereich (47a, 47b) auf einer ersten Fläche (22a) trägt.

9. Antriebssystem eines Wischerblatts einer Glasscheibe eines Kraftfahrzeugs, wobei das Antriebssystem (10) umfasst:
- eine Vorrichtung (12) zum Bewirken einer abwechselnden Wischbewegung des Wischers in Bezug auf die Glasscheibe, umfassend einen Motor (16) zum Antrieb, und
- einen elektrischen Schalter (42) umfassend wenigstens ein vom Motor (16) in Drehung um eine Drehachse (C) angetriebenes Antriebsrad (22) und ein Mittel (44) zum Erfassen der Winkelstellung des Rads (22) um die erste Achse (C),
**dadurch gekennzeichnet, dass** der elektrische Schalter (42) einem der vorhergehenden Ansprüche entspricht.

10. Antriebssystem nach Anspruch 9, **dadurch gekennzeichnet, dass** es Mittel zur Montage (36) des Antriebssystems (10) im Fahrzeug umfasst, und dass die Montagemittel (36) eine die drei leitenden Kontaktmesser tragende Platte (38) umfassen.

11. Antriebssystem nach Anspruch 10, **dadurch gekennzeichnet, dass** die Montageplatte (38) einerseits mit einer entsprechenden Montagestruktur des Fahrzeugs verbunden ist und andererseits mit der Vorrichtung zum Bewirken der Bewegung (12) verbunden ist.

12. Antriebssystem nach Anspruch 10 oder 11, **dadurch gekennzeichnet, dass** die Vorrichtung zum Bewirken der Bewegung (12) einen Sockel (28) zum Stützen umfasst, der ein Innenvolumen (32) abgrenzt, in dem wenigstens ein Teil der Komponenten (20, 26) der Vorrichtung zum Bewirken der Bewegung (12) aufgenommen wird, und dass der Sockel (28) eine Öffnung (34) zum Zugang zum Innenvolumen (32) umfasst, die von der Montageplatte (38) verschlossen wird.

## Claims

1. An electrical commutator for a drive system (10) of a wiper blade of a glazed motor vehicle panel comprising a motor (16), said commutator comprising:
- at least one drive wheel (22) driven by said motor (16) in rotation about a rotation axis (C), and
- a means (44) for detecting the angular position of the wheel (22) about said rotation axis (C),
- said wheel (22) bearing:
• at least one conductive track (46), and
• at least one insulating area (47a, 47b) extending in a plane substantially parallel to the plane defined by said at least one conductive track (46),
the electrical commutator being **characterized in that** said at least one insulating area (47a, 47b) is arranged at a distance (h) from said at least one conductive track (46) in a direction (Z) substantially at right angles to the plane defined by said at least one conductive track (46), and **in that**
- said detection means (44) comprises three conductive contact blades (48, 48', 48") arranged in such a way as to come into contact with said wheel (22) and being angularly offset relative to one another.

2. The commutator as claimed in claim 1, **characterized in that** said at least one insulating area (47a, 47b) is in the form of a ramp.

3. The commutator as claimed in claim 2, **characterized in that** said ramp has a height greater than or equal to 1 mm.

4. The commutator as claimed in any one of claims 1 to 3, **characterized in that** said wheel (22) bears a first neutral insulating area (47a) at the periphery of said wheel (22) a second stop insulting area (47b) arranged toward the interior of said wheel (22), said insulating areas (47a, 47b) being arranged on either side of a conductive track (46).

5. The commutator as claimed in claim 4, **characterized in that** said first neutral insulting area (47a) and said second stop insulating area (47b) are in the form of ramps.

6. The commutator as claimed in either one of claims 4 or 5, **characterized in that** said first neutral insulating area (47a) has a generally open circular form, and **in that** said conductive track (46) extends into the opening of said first neutral insulating area (47a).

7. The commutator as claimed in any one of claims 4 to 6, **characterized in that** the three contact blades (48, 48', 48") comprise:
- a first contact blade (48) configured to cooperate with said first neutral insulating area (47a),
- a second contact blade (48') configured to cooperate with the conductive track (46) or with the second stop area (47b) depending on the angular position of said wheel (22), and
- a third contact blade (48") configured to cooperate with the conductive track (46).

8. The commutator as claimed in any one of the preceding claims, **characterized in that** said wheel (22) bears said conductive track (46) and said at least one insulating area (47a, 47b) on a first face (22a) configured to be arranged facing a mounting plate (38) for said drive system (10).

9. A drive system for a wiper blade of a glazed motor vehicle panel, said drive system (10) comprising:
- a device (12) for producing a reciprocating sweeping movement of said blade relative to said glazed panel, comprising a drive motor (16), and
- an electrical commutator (42) comprising at least one drive wheel (22) driven by said motor (16) in rotation about a rotation axis (C) and a means (44) for detecting the angular position of the wheel (22) about the first axis (C),
**characterized in that** said electrical commutator (42) is in accordance with any one of the preceding claims.

10. The drive system as claimed in claim 9, **characterized in that** it comprises means (36) for mounting the drive system (10) in said vehicle, and **in that** said mounting means (36) comprise a plate (38) bearing the three conductive contact blades.

11. The drive system as claimed in claim 10, **characterized in that** said mounting plate (38) is on the one hand linked to an associated mounting structure of said vehicle and on the other hand is linked to the movement-producing device (12).

12. The drive system as claimed in either one of claims 10 or 11, **characterized in that** said movement-producing device (12) comprises a support plinth (28) which delimits an internal volume (32) in which at least some of the components (20, 26) of said movement-producing device (12) are received, and **in that** the plinth (28) comprises an opening (34) for accessing the internal volume (32) which is closed by said mounting plate (38).
